# EUROPEAN PATENT SPECIFICATION

(11) **EP 0 952 729 B1**
(45) Date of publication and mention of the grant of the patent: **02.11.2006**
(21) Application number: 99107046.7
(22) Date of filing: 09.04.1999
(51) Int. Cl.: H04N 1/41, H04N 1/21

(54) **Electronic camera apparatus equipped with preview image preparation function**
Elektronische Kamera mit Bildvorschaufunktion
Caméra électronique avec fonction de prévisualisation

(30) Priority: 20.04.1998 JP 12525498
(43) Date of publication of application: 27.10.1999
(73) Proprietor: CASIO COMPUTER CO., LTD., Shibuya-ku, Tokyo (JP)
(72) Inventor: Hosoda, Jun, C/O Casio Computer Co., Ltd., Hamura-shi, Tokyo 205-8555 (JP); Ogura, Kazuo, C/O Casio Computer Co., Ltd., Hamura-shi, Tokyo 205-8555 (JP); Sato, Ken, C/O Casio Computer Co., Ltd., Hamura-shi, Tokyo 205-8555 (JP); Sakamoto, Shohei, C/O Casio Computer Co., Ltd., Hamura-shi, Tokyo 205-8555 (JP); Takayanagi, Haruhisa, C/O Casio Computer Co., Ltd., Hamura-shi, Tokyo 205-8555 (JP); Narushima, Kazuhiro, C/O Casio Computer Co., Ltd., Hamura-shi, Tokyo 205-8555 (JP); Tokunaga, Satoshi, C/O Casio Computer Co., Ltd., Hamura-shi, Tokyo 205-8555 (JP); Uchida, Kouichi, C/O Casio Computer Co., Ltd., Hamura-shi, Tokyo 205-8555 (JP); Daigo, Kouichiro, C/O Casio Computer Co., Ltd., Hamura-shi, Tokyo 205-8555 (JP)
(74) Representative: Grünecker, Kinkeldey, Stockmair & Schwanhäusser Anwaltssozietät

(56) References cited:
- EP-A- 0 448 311
- EP-A- 0 493 130
- EP-A- 0 810 778
- US-A- 5 386 300
- US-A- 5 461 682

## Description

The present invention relates to an electronic camera apparatus and a control method therefor, and relates, more particularly, to an electronic camera apparatus and a control method therefor capable of recording main image data and recording preview image data as well.

In a digital camera as a kind of an electronic camera apparatus, it has been general that a picked-up image is recorded in a storage memory after the image has been compressed, for effective utilization of the memory.

For compressing the image, there is available a method for using a certain compression factor for the whole picked-up image. However, according to this method, for example, according to a JPEG (*1) compression method, the size of a picked-up image changes depending on the content of the image, and it requires a complex management of the picked-up image recorded in the storage memory. *1: JPEG (Joint Photographic Experts Grout) is an international coding standard for color still images (full-color or grayscale still images not including binary images and dynamic images). In JPEG, there are two systems prescribed; a reversible coding system which enables a complete reproducing of compressed data to original data, and a non-reversible coding system which cannot reproduce compressed data to original data. In most cases, the latter non-reversible coding system with a higher compression factor is used. JPEG is convenient in that deterioration of picture quality due to coding can be controlled freely to some extent, by adjusting parameters used for compression (compression parameters).

In other words, at the coding side, a suitable compression parameter can be selected by a tradeoff between the picture quality and the file size, and at the decoding side, it is easy to select either to increase the decoding speed at the cost of quality to some extent or to reproduce the image in highest quality even if it takes some time.

A practical compression factor of JPEG is within a range of about 10 : 1 to 50 : 1 in the case of the non-reversible coding. In general, there arises no visual deterioration if the compression factor is in the range of 10 : 1 to 20 : 1, and the compression factor in the range of 30 : 1 to 50 : 1 is still sufficiently practicable if some deterioration is permitted. A compression factor according to other coding system, such as GIF (Graphic interchange Format) for example, is about 5 : 1. From this, the superiority of JPEG is apparent.

Under this situation, in order to facilitate the management of the picked-up image, there is available a method for recording a picked-up image in a storage memory in an aligned memory size by controlling the image compression factor such that the compression factor is high for a complex picked-up image and the compression factor is low for a simple picked-up image.

This method, however, has a problem in that it takes a very long time for compressing the image, because after once carrying out a test compression for determining a compression factor for a picked-up image, the determined compression factor must be used again to make a final compression of the image. Such a method is known from EP-A493130.

Further, in the case of making a display of a picked-up image recorded in the storage memory by reproducing the image on a liquid crystal display equipped in the camera main body, it is necessary to carry out a component rate conversion processing and a gamma correction processing (*2) for matching the image with the properties of the liquid crystal display in addition to an image expansion processing. Therefore, it takes a very long time for reproducing the image.

This is because of the assumption used that the picked-up image recorded in the storage memory is processed by using an external personal computer. This requires the component rate conversion processing and the gamma correction processing to be carried out for matching the image with the properties of the monitor for this computer such features are disclosed in EP-A-0 810 778 and US-A-5 461 682. *2: The gamma correction processing is a processing for correcting an input signal which is carried out to match an image with non-linear input/output properties of a display device. For example, in a television broadcasting, primary color signals E_{R}, EG, and E_{B} obtained by an image pickup tube are converted into correction voltages E_{R}', E_{G}', and E_{B}' by a gamma corrector. In this case, E_{*}' = E_{*}' 1/γ (where * is R, G or B; the same hereinafter). By using a suitable gamma value γ, it is possible to prorate luminance L (= kE_{*}'γ) reproduced by a display device (generally a cathode ray tube (CRT)) of a television receiver, to E_{*}.

The above-described problems have become larger along with an increase in the resolution of the picked-up image.

It is an object of the present invention to provide an electronic camera and a control method therefor capable of substantially reducing a compression processing time of a picked-up image.

The above object is achieved with a camera according to claim 1 and a method according to claim 16.

The invention can be more fully under stood from the following detailed description when taken in conjunction with the accompanying drawings, in which:
FIG. 1 is a perspective view of a digital camera according to one embodiment of the present invention.
FIG. 2 is a block diagram for showing a structure of the digital camera.
FIG. 3 is a flowchart for showing the content of a processing during a recording mode of the digital camera.
FIG. 4 is a correlation diagram of a compression parameter and a preview image size to be applied to a compression of a main image.
FIG. 5 is an explanatory view for showing a structure of data within a flash memory.
FIG. 6 is a flowchart for showing the content of a processing during a reproduction mode of the digital camera.
FIG. 7 is a display status view during a reproducing of a preview image.
FIG. 8 is a connection state view of a case where the digital camera is connected with an external unit (a TV monitor).
An embodiment of the present invention will be explained below by taking an example of a digital camera equipped with a charge coupled device (CCD) of one million pixels, with reference to drawings.

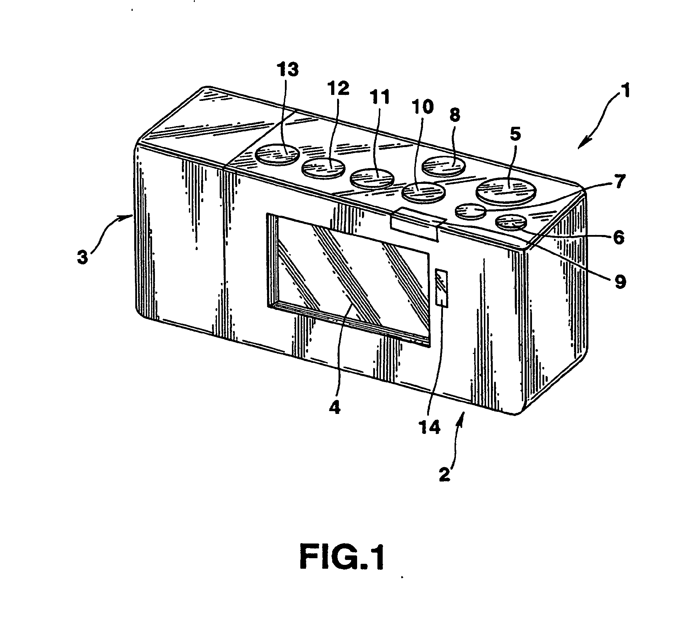

FIG. 1 is a perspective view of a digital camera in the present mode of the invention. A digital camera 1 is divided into a main body part 2 and a camera part 3 rotatably attached to the main body part 2, though not particularly limited to this division. A lens not shown is mounted on a front surface (a rear surface side of the drawing) of the camera part 3. To the rear side of the lens, there is also attached a CCD of one million pixels not shown. During a recording mode to be described later, the CCD converts an image of an object taken in from the lens into an electric signal, and generates a high-resolution frame image corresponding to the resolution of one-million pixel class.

On the other hand, on the main body part 2, there is provided a liquid crystal display 4 for reproducing a preview image for an image confirmation (reference) (also called a thumbnail image or an index image) to be described later and a main image. Various operation keys including a shutter key 5 are also fitted to the main body part 2. The operation keys include, for example, a plus key 6, a minus key 7, a delete key 8, a power supply key 9, a mode key 10, a display key 11, a zoom key 12, a self-timer key 13, a function switch 14, etc. Some of these operation keys will be explained below for understanding the operation of flowcharts to be described later.

### (1) Shutter key 5:

This has a role as shown by this name in the recording mode, and this key has a role of an "execution" key of a selected function in the reproduction mode.

### (2) Plus key 6:

This is a key for selecting a reproduced image in a plus direction (a direction of the latest image). In the case of a multi-screen or various setting screens, the key moves a cursor to a down or right direction on the screen.

### (3) Minus key 7:

This has a similar function to that of the plus key, except that the key direction is opposite to that of the plus key.

### (4) Mode key 10:

This key is for selecting various functions in the recording mode and reproduction mode. Particularly, in the reproduction mode, this key is used for stopping (finishing) the function currently selected and moving to a next function.

### (5) Function switch 14:

This is a slide switch for changing over between the recording mode and the reproduction mode. When the switch is slid upward, the recording mode is obtained, and when the switch is slid downward, the reproduction mode is obtained.

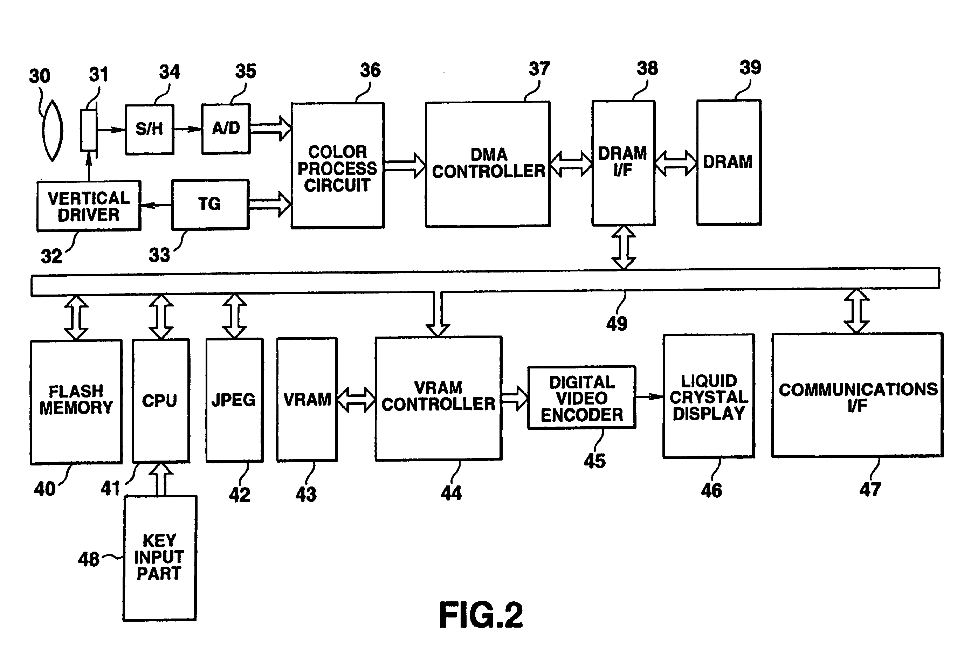

FIG. 2 is a block diagram of the digital camera according to the present embodiment. 30 denotes a lens, 31 a CCD, 32 a vertical driver, 33 a timing generator (TG), 34 a sample holding circuit, 35 an analog-to-digital converter, 36 a color process circuit, 37 a direct memory access (DMA), 38 a dynamic random access memory (DRAM) interface, 39 a DRAM, 40 a flash memory, 41 a central processing unit (CPU), 42 a Joint Photographic Experts Group (JPEG) circuit, 43 a video random access memory (VRAM), 44 a VRAM controller, 45 a digital video encoder, 46 a liquid crystal display, 47 a communication interface, 48 a key input part, and 49 a bus.

These parts have the following outline functions.

### (A) Lens 30:

This is a so-called photographic lens. Photographic lenses include various kinds such as a fixed focus distance lens, a variable focus distance lens, etc. and there are also various combinations of lenses. Since they have no direct concern with the present invention, their detailed explanation will be omitted.

### (B) CCD 31:

This is a device of a MOS (metal-oxide semiconductor) structure for transferring charges in an array shape, and thus this is called a charge coupled device. There is also a charge coupled device used for an analog delay line or the like. However, in the present specification, the CCD refers to a so-called image sensor for particularly converting one-dimensional or two-dimensional optical information into time-series electric signals. The image sensor also includes an image pickup tube using vacuum tube, in addition to a solid image pickup element like a CCD or a CMOS (complementary metal-oxide semiconductor). The image pickup tube includes a baking and, therefore, is large and heavy, involving large power consumption. Although there is no example that this image pickup tube has actually been used for a digital camera, this is not positively excluded from the present invention. In other words, the image pickup means of the present invention includes not only a solid image pickup element but also an image pickup tube using a vacuum tube.

An outline structure and operation of the CCD will be explained below by taking an example of a solid image pickup element of MOS structure in the light of the convenience of explanation and the structure of an actual digital camera.

In general, a CCD is structured by a photoelectric converting section having a large number of photoelectric converting elements (photodiodes) laid out in an array shape, a charge accumulating section for accumulating an output charge of the photoelectric converting elements, and a charge reading section for reading the charge of the charge accumulating section according to a predetermined system. Each of the photoelectric converting elements becomes a pixel. For example, in the case of a CCD having one million pixels as an effective number of pixels, at least one million squares of an array are arranged. For the sake of convenience of explanation, it is assumed that the effective number of pixels of the CCD 31 is 1280 × 960. In other words, it is assumed that the CCD has an array structure of 1280 columns and 960 rows, with 1280 pixels arranged in a lateral direction and 960 pixels arranged in a vertical direction.

Further, generally, a CCD is divided into two types according to a charge reading system. A first type is a "skip reading" type for skipping each one pixel when reading a signal, and a second type is a "whole reading" type for sequentially reading the whole pixels. The first type is used in most cases for a camera consolidated type VTR (video tape recorder), and the second type is mainly used for a digital camera. The CCD 31 of the present embodiment also uses the second type, but this is not limited.

### (C) Vertical driver 32 and timing generator 33:

They generate a timing signal necessary for the reading of the CCD 31. As the CCD 31 of the present embodiment is assumed to be the whole reading type, these portions generate a timing signal for making it possible to read pixels of the CDD 31 in each row unit by sequentially assigning each column, that is, a timing signal for making it possible to read pixel information in time series in the left top to right down direction of the array structure having 1280 columns and 960 rows (this direction is similar to the scanning direction of a television).

### (E) Sample holding circuit 34:

This circuit samples time series signals read out from the CCD 31 (analog signals at this stage) in the frequency suitable for the resolution of the CCD 31.

### (F) Analog-to-digital converter 35:

This converts a sampled signal into a digital signal.

### (G) Color process circuit 36:

This circuit generates a luminance and color difference multiplexing signal(hereinafter to be referred to as a YUV signal) from the output of the analog-to-digital converter 35. This circuit generates a YUV signal for the following reason. The output of the analog-to-digital converter 35 corresponds to the output of the CCD 31 at practically one to one except the difference between analog and digital and errors in sampling and digital conversion. This is three primary color data (RGB data) itself. This data has a large size and is inconvenient from the viewpoint of the utilization of a limited memory resource and a processing time. Therefore, it is necessary to reduce the quantity of data to some extent by some means. It can be said that the YUV signal is a kind of a data quantity reducing signal based on the principle "Generally, each element data (R data, G data and B data) of the RGB data can be expressed by three color difference signals of G - Y, R - Y and B - Y, and except for the redundancy of these three color difference signals, G - Y may not be transferred. - can be reproduced by G - Y = α(R - Y) - β (B - Y)--" , where α and β are composite coefficients.

While the YUV signal is also called a YCbCr signal (where Y is a luminance signal and Cb and Cr are color difference signals of B -Y and R - Y respectively, the term of YUV signal is used consistently in the present specification. Further, a signal format of the YUV signal is structured by three blocks of constant length called "component", each independently including a luminance signal and two color difference signals. A ratio of length (number of bits) between each component is called a "component ratio". A component ratio of the YUV signal immediately after a conversion is "1 : 1 : 1", but the data quantity can be reduced by shortening two components of the color difference signal, that is, by setting a ratio of "1 : x : x" (where x < 1). This utilizes a fact "Human visual characteristics are less sensitive to a color difference signal than to a luminance signal."

The component ratio can also be changed by the color process circuit 36, but in the present embodiment, the component ratio is changed by software in the CPU 41 to be explained later. The reason may become clear from the following explanation. In the present embodiment, an image (main image) recorded in the flash memory 40 and transferred to an external unit such as a personal computer or a printer or the like for image processing and an image (preview image) to be displayed in the liquid crystal display 46 or an external TV monitor for image confirmation, are generated by software by the CPU 41. The resolutions (sizes) of these two kinds of images, for example, 1280 × 960 pixels for the main image and 120 × 80 pixels for the preview image, are different, and therefore, devices for displaying are different. Thus, since the same component ratio cannot always be used, it is necessary to select separate component ratios that meet the main image and the preview image respectively at the time of an image generation. The operations of generating many component ratios and selecting component ratios from them according to the resolution of images and properties of a display device can be done freely by software.

### (H) DMA controller 37:

This is for transferring data between the color process circuit 36 and the DRAM 39 (the DRAM interface 38, to be more precise) without the presence of the CPU 41. In other words, this carries out a so-called direct memory transfer (DMA). This is also abbreviated as DMAC. In general, the DMAC is for controlling a data transfer between a memory and a memory or between a memory and an I/O unit, instead of the CPU and I/O processor, in a compact computer system or the like. This generates a source address and a destination address necessary for the data transfer, and drives a reading cycle of a source and a writing cycle of a destination. The CPU or I/O processor shifts the control to the DMAC after setting an initial address, a kind of cycle and a transfer size to the DMAC. The DMAC starts a data transfer after receiving a DMA transfer request signal from the I/O unit or the I/O processor.

### (I) DRAM interface 38:

This is for taking a signal interface between the DRAM 39 and the DMA controller 37 and a signal interface between the DRAM 39 and the bus 49.

### (J) DRAM 39:

This is a kind of a rewritable semiconductor memory. Generally, a DRAM is different from a static RAM (SRAM) in that data is rewritten (refreshed) dynamically for holding the memory content. Although the writing speed and reading speed of the DRAM are slower than those of the SRAM, the DRAM can be structured at lower unit cost of bits to enable a provision of a temporary storage of a large capacity at low cost. Accordingly, the DRAM is particularly suitable for a digital camera. However, the memory is not limited to the DRAM in the present invention. A rewritable semiconductor memory is acceptable.

The memory capacity of the DRAM 39 must meet the following conditions. A first condition is that the CPU 41 must secure a sufficiently large work space required. Since the size of the work space is determined by an architecture of the CPU 41 and an OS (operating system) and various application programs executed under the management of the OS, a sufficiently large space is secured by investigating their specifications. A second condition is that a temporary storage space must be secured for a picked up image. The storage space may be a part of the above work space. However, the storage space needs to have a size capable of storing at least highly fine image information generated by the color process circuit 36 (image information of 1280 × 960 pixels and a YUV signal having a component ratio of "1 : 1 : 1").

### (K) Flash memory 40:

Of a programmable read only memory (PROM), a flash memory 40 is a memory capable of electrically erasing the content of the whole bits (or block unit) and rewriting the content. This is also called a flash electrically erasable PROM (flash EEPROM). The flash memory 40 of the present embodiment may be of a fixed type that cannot be extracted from the camera main body or of an detachable type like a card or package flash memory. The flash memory 40 needs be formatted in a predetermined format in advance regardless of whether the flash memory is incorporated or detachable. The formatted flash memory 40 can record images according to the memory capacity.

### (L) CPU 41:

This is for making an integrated control of the operation of the camera by executing a predetermined program. For example, the program is written in advance on an instruction ROM incorporated in the CPU 41. In the recording mode, a program of this mode is loaded onto a RAM inside the CPU 41 from the instruction ROM and this program is executed. In the reproduction mode, a program of this mode is loaded and executed in a similar manner.

### (M) JPEG circuit 42:

This is a portion for compressing and expansion of the JPEG. A compression parameter of the JPEG is given from the CPU 41 at each time of the compression. From the viewpoint of the processing speed, the JPEG circuit 42 should be in an exclusive hardware. However, this can also be done by software by the CPU 41.

### (N) VRAM 43:

This is a so-called video RAM. When a preview image or a main image is written in the VRAM 43, the preview image or the main image is sent to the liquid crystal display 46 through the digital video encoder 45, and is displayed.

There is also a video RAM having two ports for writing and reading, for carrying out writing and reading of an image in parallel at the same time. This type of video RAM can also be used for the VRAM 43 of the present embodiment.

### (O) VRAM controller 44:

This is a portion for controlling a data transfer between the VRAM 43 and the bus 49 and between the VRAM 43 and the digital video encoder 45. In short, this controller controls the writing of a display image (a preview image or a main image) to the VRAM 43 and the reading of the same image from the VRAM 43. When a dual-port type video RAM is used, the VRAM controller 44 may be unnecessary or may be simplified.

### (P) Digital video encoder 45:

This is for converting a display image of a digital value read from the VRAM 43 into an analog voltage and, at the same time, for sequentially outputting the image at a timing according to the scanning system of the liquid crystal display 46.

The digital video encoder 45 is an encoder for encoding digital image data having resolution of "360 × 240" and a component ratio of "4 : 2 : 2".

### (Q) Liquid crystal display 46:

This is a compact liquid crystal panel of a few inches attached to the rear side of the camera main body (reference 4 in FIG. 1). This has pixels of 279 × 220.

### (R) Communications interface 47:

This is a portion for taking a signal interface with an external unit (a printer, a television monitor, a personal computer or the like). Although not limited, this interface employs a general purpose communication protocol such as RS-232C and an optical communications.

### (S) Key input part 48:

This is a portion for generating an operation signal of various key switches provided in the camera main body.

### (T) Bus 49:

This is a data (and address) transfer path shared by the above-described parts. Various control lines are also provided between the parts although they are omitted from the drawing.

When the function switch 14 of the camera main body is operated in the above-described structure, the operation mode of the camera can be changed over between the recording mode and the reproduction mode.

### <Recording mode>

In the recording mode, at first, the CCD 31 disposed at the back of the lens 30 is driven by the signals from the vertical driver 32 and the timing generator 33, and images collected by the lens 30 are photoelectrically converted at every predetermined cycle so that an image signal for one frame is output. Then, this image signal is sampled by the sample holding circuit 34, and is then converted into a digital signal by the analog-to-digital converter 35. Thereafter, a YUV signal is generated by the color process circuit 36. This YUV signal is transferred to the DRAM 39 through the DMA controller 37 and the DRAM interface 38. After the transfer of this signal to the DRAM 39 has been completed, the signal is read by the CPU 41. The CPU 41 carries out the following characteristic processing.

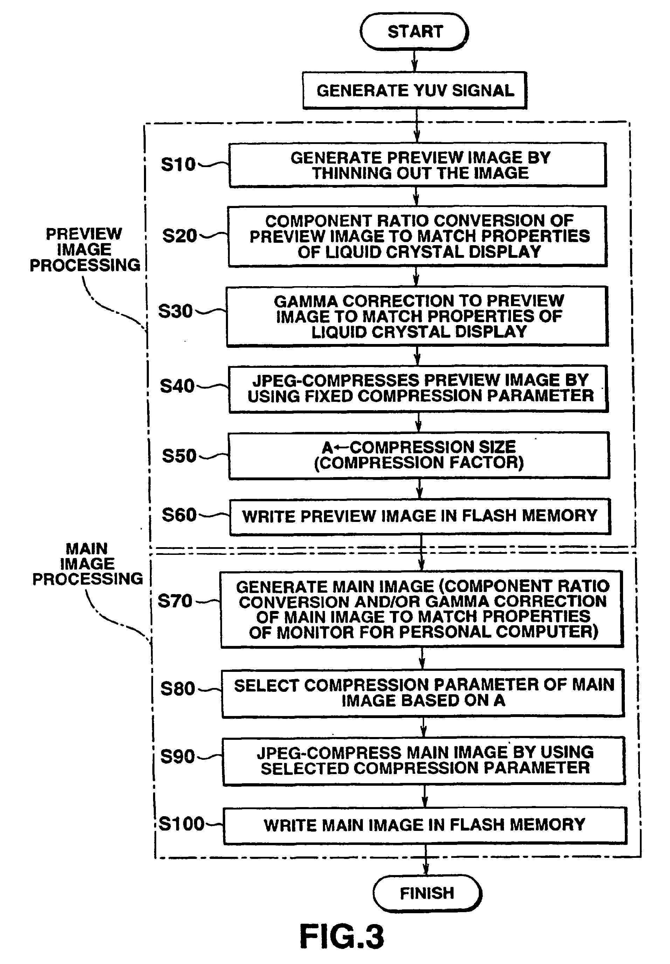

FIG. 3 shows a flowchart of this processing. This flowchart is executed in response to the depression of the shutter key 5. The whole flow is divided into "preview image (simple image) processing" and "main image (detailed image) processing".

In this case, the preview image refers to an image of 120 × 80 pixels which is further reduced from the input resolution of 360 × 240 pixels of the digital video encoder 45. This is mainly a reference image for confirming an image by outputting the image to an external TV monitor (CRT) or by displaying the image on a liquid crystal display provided in a digital camera. The main image mainly refers to a highly fine image of 1280 × 960 pixels for being output to an external unit and printed by a printer or for being displayed in a highly fine monitor or for being displayed in a monitor (CRT) of a personal computer and being processed.

When the input resolution of the digital video encoder 45 approximately coincides with the resolution of the liquid crystal display 46, the input resolution of the digital video encoder 45 can also be referred to as the resolution of the liquid crystal display 46.

Referring to the flowchart shown in FIG. 3, at first, the YUV signal (1280 × 960) of the component ratio of "1 : 1 : 1" temporarily stored in the DRAM 39 by the image pickup processing is read, and a preview image is generated by reducing this resolution to 120 × 80 (S10). Then, the component ratio is changed from the "1 : 1 : 1" to "4 : 2 : 2" at which ratio the image can be encoded by the digital video encoder 45 (S20). This change is equivalent to a reduction of the data quantity of the two color difference signals to a half with respect to the luminance component of the YUV signal. This means that the data quantity can be reduced by this amount and, at the same time, it becomes unnecessary to carry out a component ratio conversion processing at the time of reproducing the image. Accordingly, a quick display is made possible. It is needless to mention that the component ratio of the change destination may not be "4 : 2 : 2". For example, this component ratio may be "4 : 1 : 1". In short, the ratio of "1 : x : x" (where x < 1) is acceptable that matches the properties of the digital video encoder (display device) 45.

Next, a gamma correction is carried out for the generated preview image (S30). As explained at the beginning, since the value of the gamma correction depends on the display properties of the display device, it is necessary to employ a correction value that matches the actual display properties of the display device of the preview image, that is, the liquid crystal display 46 (TV display). A proper gamma correction for the preview image enables a display of all the gradations in good reproduction with improved quality of the reproduced image at the time of making display of the preview image in the liquid crystal display 46 of the camera main body (or an external TV display).

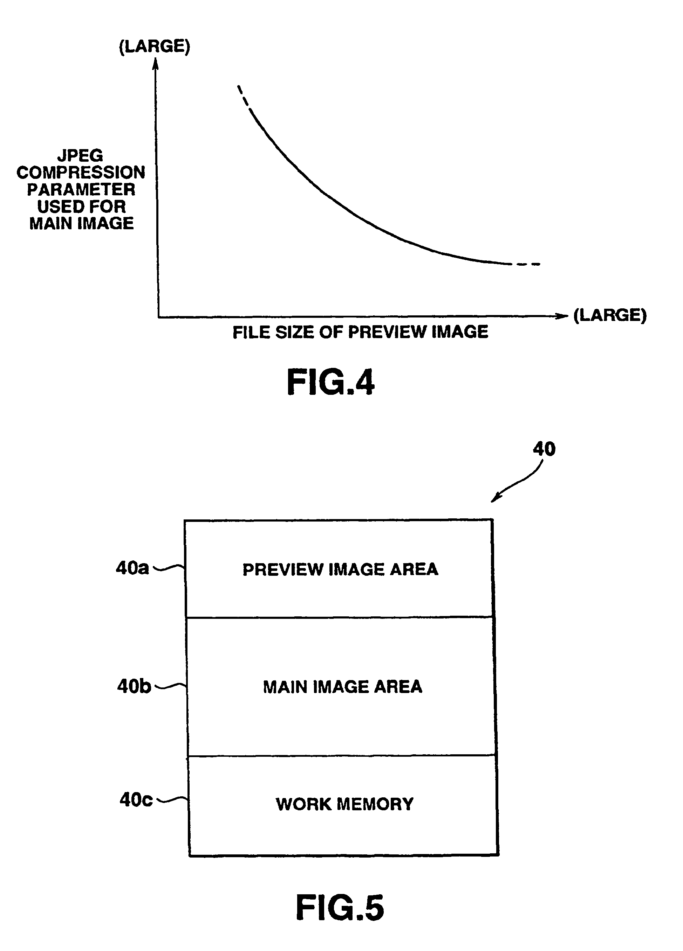

Next, the preview image after the gamma correction is JPEG-compressed in a unit called a basic block of 8 × 8 pixels for each component (S40). This compression processing is carried out for recording the preview image in a preview image area 40a of the flash memory 40 shown in FIG. 5 in the following steps. This compression processing is necessary for reducing the data quantity of the image as much as possible without affecting the storage capacity of the flash memory 40.

In this case, a "fixed value" suitably selected in advance is used for the parameter (compression parameter) of the JPEG compression of the preview image. This is for calculating the compression factor (compression size) of the preview image and storing it in a variable A (S50). In general, the compression factor of the JPEG compression changes in a large extent based on the content of the image. For example, the compression factor may change by two to three times between a complex image and other image. On the other hand, in the JPEG compression, the compression factor can be adjusted by changing the compression parameter. When a small compression parameter is used, a large compression factor is obtained (the size of the image becomes smaller) and, when a large compression factor is used, a small compression factor is obtained (the size of the image becomes larger).

Generally, in a digital camera, the number of frames of pictures that can be taken is calculated from a spare capacity of the flash memory (the main image area 40b shown in FIG. 5), and this number is displayed at a suitable position (for example, a finder) of the camera main body to inform the user of this number. If it is not possible to predict the compression factor of an image (particularly the main image with a large data quantity), it is not possible to calculate the number of pictures that can be taken or even if the number can be predicted, this is not reliable at all. As a result, there arises a serious inconvenience in camera operation that an image cannot be recorded in the flash memory although a remaining number of pictures that can be taken is displayed.

To solve this problem, a conventional digital camera has employed a method that the compression parameter is set small for a complex image and the compression parameter is set large for a simple image, thereby to prepare images of aligned sizes. According to this method, it has been possible to predict an accurate number of pictures that can be taken from the spare capacity of the flash memory since the image recordable size is known in advance, and thus, the above-described problem does not occur. This method, however, has one drawback. This requires a two-stage compression processing. That is, in selecting a compression parameter, at first, a tentative compression is carried out to obtain a compression factor, and then a compression is carried out by using a suitable compression parameter obtained from this compression factor. Accordingly, this takes a long compression time.

On the other hand, according to the compression processing of a main image in the present embodiment, only one compression is required as explained later, taking only a half of the processing time in a simple calculation. This is because the compression parameter of the main image is selected based on the compression factor (content of the variable A) of the preview image that is a reduced image prepared from the same original image (reference FIG. 4).

Next, after the JPEG-compressed preview image has been recorded in the preview image area 40a of the flash memory 40 (S60), the processing of the main image is started. The main image in this case refers to an image of the preview image recorded in the flash memory 40 in step S60 that is identical with the original image (the YUV signal temporarily stored in the DRAM 39).

At first, the main image is generated from the YUV signal temporarily stored in the DRAM 39 (S70). Although the number of pixels of the main image is 1280 × 960 which is the same as that of the YUV signal, the component ratio is changed from "1 : 1 : 1" of the YUV signal to "4 : 1 : 1" generally used by the monitor and the printer of the personal computer, for the same reason as that for the preview image described above. Then, a gamma correction is carried out for the main image to match the properties of the monitor of the personal computer or the like.

Next, the compression parameter of the JPEG compression is selected based on the compression factor of the content of the variable A, that is, the preview image prepared from the identical original image (S80). Then, the main image is JPEG-compressed in the basic block unit for each component by using this compression parameter (S90). Thereafter, the main image after the compression is recorded in the main image area 40b of the flash memory 40 (S100) and the processing finishes. The main image recorded in the step S100 is recorded by being associated with the preview image recorded in the step S60.

In the flow shown in FIG. 3, the preview image recorded in the step S60 is the preview image JPEG-compressed in the step S40. However, the preview image recorded in the step S60 may also be the preview image gamma-corrected (that is, non-compressed preview image) in the step S30. With this arrangement, although the quantity of data to be stored increases to some extent, it becomes unnecessary to carry out an expansion processing at the time of image reproduction. Accordingly, a much faster display becomes possible.

As explained above, according to the present embodiment, since a preview image is generated and then this is recorded in the flash memory 40 together with a main image, there are following advantages. First, in the reproduction mode, the regeneration processing of the preview image (corresponding to the reconversion processing of the component ratio in the prior art) becomes unnecessary, and the display of the preview image to the liquid crystal display 46 can be done at high speed. Second, the gamma correction to the preview image can be adjusted to be suitable for the liquid crystal display 46. Thus, the display quality can be improved. Further, the recorrection processing of the gamma properties in the reproduction mode becomes unnecessary. The display speed can be increased in this respect as well. Third, the conversion of the component ratio or the gamma correction to the main image can be carried out, so that a suitable component ratio or a suitable gamma correction value that match the display (output) object (display for the computer) can be applied. For example, a suitable gamma value can be selected depending on whether the main image is displayed in the liquid crystal display or the cathode ray tube (CRT). When input and output characteristics are different even if the same cathode ray tube is used, gamma values suitable for the respective input and output characteristics can be applied easily.

### <Reproduction mode>

In the reproduction mode, a program for this mode is executed, and the route from the CCD 31 to the DRAM 39 is stopped. In response to the operation of the plus key 6 and the minus key 7 of the camera main body, a preview image read from the flash memory 40 is displayed in the liquid crystal display 46 of the camera main body, followed by the display of the corresponding main image.

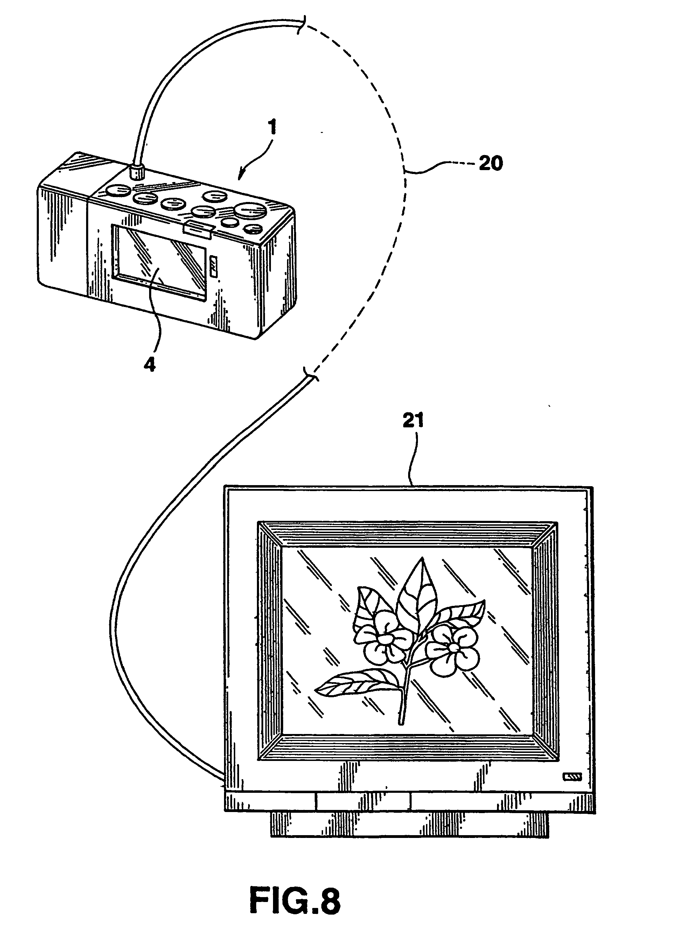

Further, according to the digital camera of the present embodiment, the preview image and the main image displayed in the liquid crystal display 46 of the camera main body can also be output to an external unit such as the TV monitor by connecting it with the communications interface 47, as shown in FIG. 8.

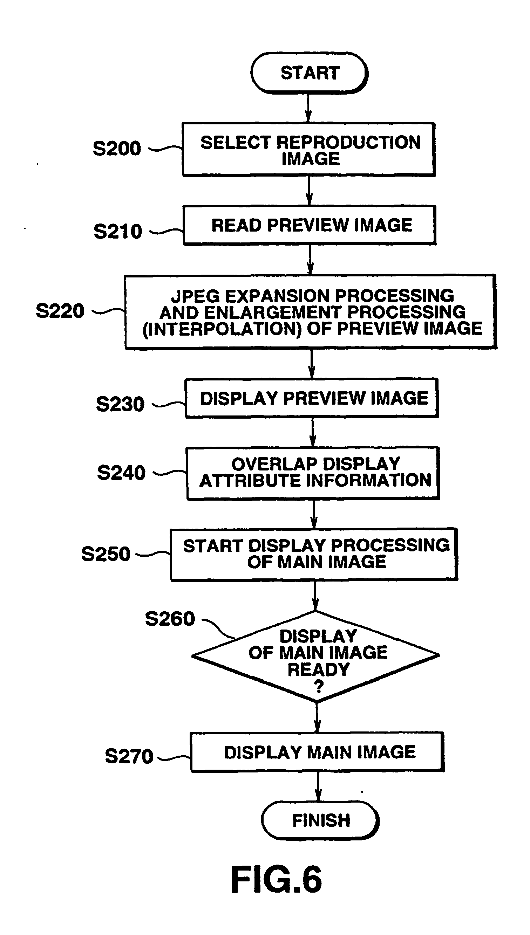

FIG. 6 shows a flowchart of this operation.

In FIG. 6, at first, a reproduction image, that is, a preview image, to be displayed in the liquid crystal display 46 is selected by operating the plus key 6 and the minus key 7 (S200).

Next, the selected preview image is read from the preview image area 40a of the flash memory 40, and is stored in the DRAM 39 (S210).

Then, the JPEG expansion processing is executed to the preview image stored in the DRAM 39, and at the same time, an expansion processing (interpolation processing) is executed for matching the image with the input resolution of the digital video encoder 45 (S220).

In other words, the preview image of the resolution (120 × 80) is converted to the image of the resolution (360 × 240).

Then, the preview image expanded in the step S220 is displayed quickly in the liquid crystal display 46 (S230), and at the same time, predetermined information for showing that the currently displayed image is a low-resolution preview image is overlap displayed (S240).

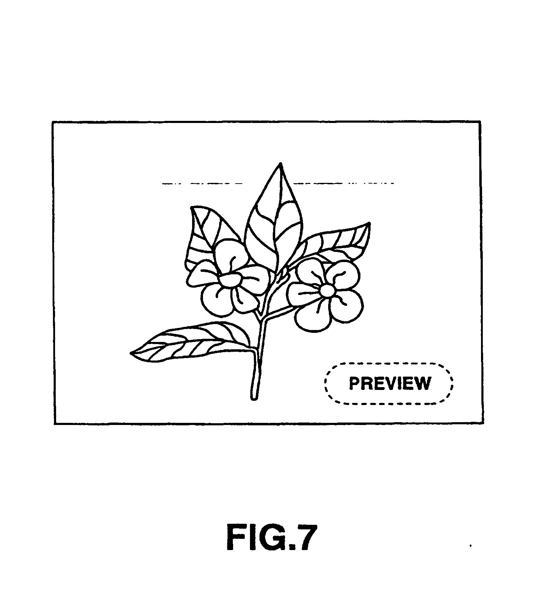

For example, FIG. 7 shows an example of the overlap display. A picture of a flower shown provisionally is the preview image, and a character (PREVIEW) encircled by a broken line at the right bottom shows the predetermined information.

This informs the user that this is a preview image of lower resolution (accordingly, lower picture quality) than the main image, and this can avoid the user's misunderstanding (the misunderstanding that only the picture quality of the preview image can be obtained) of the performance of the camera.

In the case, when the TV monitor 21 is connected as an external unit with the camera main body through the cable 20, as shown in FIG. 8, a display similar to that of the liquid crystal display 46 is made in the TV monitor from the video output.

Next, the main image which is the preview image displayed in the liquid crystal display 46 identical with the original image is read from the main image area 40b of the flash memory 40, and this is stored in the DRAM 39. Then, the display preparation of the main image is started (S 250).

In other words, as the display preparation of the main image, there are started the JPEG expansion processing, the reduction processing (thinning-out processing) as a size conversion processing for matching the image with the input resolution of the digital video encoder 45, and the component ratio reconversion processing and the gamma properties recorrection processing to match with the properties of the liquid crystal display 46.

When the display preparation of the main image has been completed in step S 260, the main image is displayed in the liquid crystal display 46 instead of the preview image (S270), and thus the processing is finished.

As explained above, according to the present embodiment, it is not necessary to carry out the component ratio conversion processing and the gamma correction processing each time when the plus key 6 and the minus key 7 are operated as in the prior art. Therefore, a quick display can be achieved, without operational inconvenience.

Further, although the JPEG compression processing is carried out for the preview image and the main image in the present embodiment, the compression processing can also be carried out by other compression method having similar characteristics.

## Claims

1. An electronic camera apparatus (1), comprising:
image pickup means (31) for picking up an image of an object;
first generating means (41) for generating a simple image by thinning out the image picked up by the image pickup means (31);
first compressing means (41, 42) for compressing the simple image generated by the generating means (41);
second compressing means (41, 42) for compressing the image picked up by the image pickup means (31);
first recording means (40, 40a) for recording the simple image generated by the first generating means (41) while associating the simple image with the compressed image recorded in second recording means, and
second recording means (40, 40b) for recording the image compressed by the second compressing means (41, 42);
**characterized in that**
the first compressing means (41, 42) compresses the simple image generated by the first generating means (41) by using a fixed compression parameter; and
the second compressing means (41, 42) compresses the image picked up by the pickup means (31) by using a determined compression parameter based on a compression factor of the simple image obtained as a result of the compression by the first compressing means (41, 42).

2. An electronic camera apparatus according to claim 1, wherein the first recording means (40, 40a) records the simple image compressed by the fist compressing means (41, 42) while associating the simple image with the compressed image recorded in the second recording means.

3. An electronic camera apparatus (1) according to claim 1 or 2, **characterized by** further comprising:
display control means (41) for making display means (4, 45, 46, 21) to display an image; and
display indicating means (48, 6, 7) for indicating an image display by the display means (4, 45, 46, 21), wherein,
when an image displayed by the display means (4, 45, 46, 21) has been indicated by the display indicating means (48, 6, 7), the display control means (41) makes the display means (4, 45, 46, 21) to display the simple image recorded in the second recording means (40, 40a).

4. An electronic camera apparatus (1) according to claim 3, further comprising expanding means (42) for expanding the image recorded in the second recording means (40, 40b), wherein
the display control means (41) further includes means for making the display means (4, 45, 46, 21) to display the image expanded by the expanding means (42) after making the display means (4, 45, 46, 21) to display the simple image.

5. An electronic camera apparatus (1) according to claim 1 or 2, further comprising:
display control means(41) for making display means (4, 45, 46, 21) to display an image; and
second generating means (41) for generating a simple image matched with properties of the display means (4, 45, 46, 21) by using the simple image generated by the first generating means (41), wherein
the first recording means (40, 40a) records the simple image generated by the second generating means (41) while associating the simple image with the compressed image recorded by the second recording means.

6. An electronic camera apparatus (1) according to claim 5, wherein the first compressing means (41, 42) compresses the simple image generated by the second generating means (41) by using a fixed compression parameter.

7. An electronic camera apparatus (1) according to claim 5 or 6, wherein the second generating means (41) generates an image matched with the properties of the display means (4, 45, 46, 21) by executing a component ratio conversion processing and/or a gamma correction processing.

8. An electronic camera apparatus (1) according to any one of claims 6 to 8, further comprising third generating means for generating an image matched with properties of display means of which properties are different from those of the display means (4, 45, 46, 21) by using the image picked up by the image pickup means (31), wherein
the second compressing means (41, 42) compresses the image generated by the third generating means (41) by using a compression parameter determined based on a compression factor in the first compressing means (41, 42).

9. An electronic camera apparatus (1) according to claim 8, wherein the display means of which properties are different from those of the display means (4, 45, 46, 21) is a monitor for a personal computer as an external unit.

10. An electronic camera apparatus (1) according to claim 8 or 9, wherein the third generating means (41) generates an image matched with properties of display means which are different from the properties of the display means (4, 45, 46, 21) by executing a component ratio conversion processing and/or a gamma correction processing.

11. An electronic camera apparatus (1) according to any one of claims 5 to 10. comprising:
display indicating means (48, 6, 7) for indicating an image display by the display means (4, 45, 46, 21); wherein,
when an image display by the display means (4, 45, 46, 21) has been indicated by the display indicating means (48, 6, 7), the display control means (41) makes the display means (4, 45, 46, 21) to display the simple image recorded in the second recording means (40, 40a).

12. An electronic camera apparatus (1) according to claim 11, further comprising expanding means (42) for expanding the image recorded in the first recording means (40, 40b), wherein
the display control means (41) further includes means for making the display means (4, 45, 46, 21) to display the image expanded by the expanding means (42) after making the display means (4, 45, 46, 21) to display the simple image.

13. An electronic camera apparatus (1) according to claim 12, further comprising fourth generating means for generating an image matched with the properties of the display means (4, 45, 46, 21) by using the image expanded by the expanding means (42), wherein
the display control means (41) makes the display means (4, 45, 46, 21) to display the image generated by the fourth generating means (41).

14. An electronic camera apparatus (1) according to any one of claims 3 to 13, further comprising informing means (41, 4, 46, 21) for informing a user of a fact that the simple image is being displayed in the display means when the simple image is being displayed on the display means (4, 45, 46, 21).

15. An electronic camera apparatus (1) according to any one of claims 3 to 14, wherein the display means (4, 45, 46, 21) is a liquid crystal display (4, 45, 46) equipped in a camera main body (1, 2).

16. A method for controlling an electronic camera apparatus that compresses a picked up image to be recorded, comprising:
picking up an image of an object;
generating a simple image by thinning out the image picked up;
compressing the generated simple image by using a fixed compression parameter
compressing the picked up image by using a determined compression parameter based on a compression factor of the simple image obtained as a result of the compression of the simple image;
recording the image compressed by using the determined compression parameter based on the compression factor in the compression of the simple image; and
recording the generated simple image while associating the simple image with the compressed picked-up image recorded.

## Patentansprüche

1. Elektronische Kameravorrichtung (1), die umfasst:
eine Bildaufnahmeeinrichtung (31) zum Aufnehmen eines Bildes eines Objekts;
eine erste Erzeugungseinrichtung (41) zum Erzeugen eines einfachen Bildes durch Ausdünnen des mittels der Bildaufnahmeeinrichtung (31) aufgenommenen Bildes;
eine erste Kompressionseinrichtung (41, 42) zum Komprimieren des mittels der Erzeugungseinrichtung (41) erzeugten einfachen Bildes;
eine zweite Kompressionseinrichtung (41, 42) zum Komprimieren des mittels der Bildaufnahmeeinrichtung (31) aufgenommenen Bildes;
eine erste Aufzeichnungseinrichtung (40, 40a) zum Aufzeichnen des mittels der ersten Erzeugungseinrichtung (41) erzeugten einfachen Bildes bei gleichzeitiger Verknüpfung des einfachen Bildes mit dem in der zweiten Aufzeichnungseinrichtung aufgezeichneten komprimierten Bild, und
eine zweite Aufzeichnungseinrichtung (40, 40b) zum Aufzeichnen des mittels der zweiten Kompressionseinrichtung (41, 42) komprimierten Bildes;
**dadurch gekennzeichnet, dass**
die erste Kompressionseinrichtung (41, 42) das mittels der ersten Erzeugungseinrichtung (41) erzeugte einfache Bild unter Verwendung eines festen Kompressionsparameters komprimiert; und
die zweite Kompressionseinrichtung (41, 42) das mittels der Aufnahmeeinrichtung (31) aufgenommene Bild unter Verwendung eines bestimmten Kompressionsparameters komprimiert, der auf einem Kompressionsfaktor des einfachen Bildes basiert, der als Ergebnis der Kompression mittels der ersten Kompressionseinrichtung (41, 42) gewonnen wird.

2. Elektronische Kameravorrichtung nach Anspruch 1, wobei die erste Aufzeichnungseinrichtung (40, 40a) das mittels der ersten Kompressionseinrichtung (41, 42) komprimierte einfache Bild aufzeichnet und gleichzeitig das einfache Bild mit dem in der zweiten Aufzeichnungseinrichtung aufgezeichneten komprimierten Bild verknüpft.

3. Elektronische Kameravorrichtung (1) nach Anspruch 1 oder 2, **dadurch gekennzeichnet, dass** sie des Weiteren umfasst:
eine Anzeige-Steuereinrichtung (41), die eine Anzeigeeinrichtung (4, 45, 46, 21) ein Bild anzeigen lässt, und
eine Anzeige-Signalisierungseinrichtung (48, 6, 7) zum Signalisieren einer Bildanzeige mittels der Anzeigeeinrichtung (4, 45, 46, 21), wobei
wenn ein mittels der Anzeigeeinrichtung (4, 45, 46, 21) angezeigtes Bild mittels der Anzeige-Signalisierungseinrichtung (48, 6, 7) signalisiert worden ist, die Anzeige-Steuereinrichtung (41) die Anzeigeeinrichtung (4, 45, 46, 21) das in der zweiten Aufzeichnungseinrichtung (40, 40a) aufgezeichnete einfache Bild anzeigen lässt.

4. Elektronische Kameravorrichtung (1) nach Anspruch 3, die des Weiteren eine Expansionseinrichtung (42) zum Expandieren des in der zweiten Aufzeichnungseinrichtung (40, 40b) aufgezeichneten Bildes umfasst, wobei
die Anzeige-Steuereinrichtung (41) des Weiteren eine Einrichtung enthält, die die Anzeigeeinrichtung (4, 45, 46, 21) das mittels der Expansionseinrichtung (42) expandierte Bild anzeigen lässt, nachdem sie die Anzeigeeinrichtung (4, 45, 46, 21) das einfache Bild hat anzeigen lassen.

5. Elektronische Kameravorrichtung (1) nach Anspruch 1 oder 2, die des Weiteren umfasst:
eine Anzeige-Steuereinrichtung (41), die eine Anzeigeeinrichtung (4, 45, 46, 21) ein Bild anzeigen lässt; und
eine zweite Erzeugungseinrichtung (41) zum Erzeugen eines einfachen Bildes, das an Eigenschaften der Anzeigeeinrichtung (4, 45, 46, 21) angepasst ist, unter Verwendung des mittels der ersten Erzeugungseinrichtung (41) erzeugten einfachen Bildes,
wobei die erste Aufzeichnungseinrichtung (40, 40a) das mittels der zweiten Erzeugungseinrichtung (41) erzeugte einfache Bild aufzeichnet und gleichzeitig das einfache Bild mit dem mittels der zweiten Aufzeichnungseinrichtung aufgezeichneten komprimierten Bild verknüpft.

6. Elektronische Kameravorrichtung (1) nach Anspruch 5, wobei die erste Kompressionseinrichtung (41, 42) das mittels der zweiten Erzeugungseinrichtung (41) erzeugte einfache Bild unter Verwendung eines festen Kompressionsparameters komprimiert.

7. Elektronische Kameravorrichtung (1) nach Anspruch 5 oder 6, wobei die zweite Erzeugungseinrichtung (41) ein Bild, das an die Eigenschaften der Anzeigeeinrichtung (4, 45, 46, 21) angepasst wird, durch Ausführen einer Komponentenverhältnis-Umwandlungsverarbeitung und/oder einer Gammakorrektur-Verarbeitung erzeugt.

8. Elektronische Kameravorrichtung (1) nach einem der Ansprüche 6 bis 8, die des Weiteren eine dritte Erzeugungseinrichtung zum Erzeugen eines Bildes, das an die Eigenschaften einer Anzeigeeinrichtung angepasst ist, deren Eigenschaften sich von denen der Anzeigeeinrichtung (4, 45, 46, 21) unterscheiden, unter Verwendung des mittels der Bildaufnahmeeinrichtung (31) aufgenommenen Bildes umfasst, wobei
die zweite Kompressionseinrichtung (41, 42) das mittels der dritten Erzeugungseinrichtung (41) erzeugte Bild unter Verwendung eines Kompressionsparameters komprimiert, der auf Basis eines Kompressionsfaktors in der ersten Kompressionseinrichtung (41, 42) bestimmt wird.

9. Elektronische Kameravorrichtung (1) nach Anspruch 8, wobei die Anzeigeeinrichtung, deren Eigenschaften sich von denen der Anzeigeeinrichtung (4, 45, 46, 21) unterscheiden, ein Monitor für einen Personal Computer als eine externe Einheit ist.

10. Elektronische Kameravorrichtung (1) nach Anspruch 8 oder 9, wobei die dritte Erzeugungseinrichtung (41) ein Bild, das an Eigenschaften einer Anzeigeeinrichtung angepasst ist, die sich von den Eigenschaften der Anzeigeeinrichtung (4, 45, 46, 21) unterscheiden, durch Ausführen einer Komponentenverhältnis-Umwandlungsverarbeitung und/oder einer Gammakorrektur-Verarbeitung erzeugt.

11. Elektronische Kameravorrichtung (1) nach einem der Ansprüche 5 bis 10, die umfasst:
eine Anzeige-Signalisierungseinrichtung (48, 6, 7) zum Signalisieren einer Bildanzeige mittels der Anzeigeeinrichtung (4, 45, 46, 21), wobei
wenn eine Bildanzeige mittels der Anzeigeeinrichtung (4, 45, 46, 21) durch die Anzeige-Signalisierungseinrichtung (48, 6, 7) angezeigt worden ist, die Anzeige-Steuereinrichtung (41) die Anzeigeeinrichtung (4, 45, 46, 21) das in der zweiten Aufzeichnungseinrichtung (40, 40a) aufgezeichnete einfache Bild anzeigen lässt.

12. Elektronische Kameravorrichtung (1) nach Anspruch 11, die des Weiteren eine Expansionseinrichtung (42) zum Expandieren des in der ersten Aufzeichnungseinrichtung (40, 40b) aufgezeichneten Bildes umfasst, wobei
die Anzeige-Steuereinrichtung (41) des Weiteren eine Einrichtung enthält, die die Anzeigeeinrichtung (4, 45, 46, 21) das durch die Expansionseinrichtung (42) expandierte Bild anzeigen lässt, nachdem sie die Anzeigeeinrichtung (4, 45, 46, 21) das einfache Bild hat anzeigen lassen.

13. Elektronische Kameravorrichtung (1) nach Anspruch 12, die des Weiteren eine vierte Erzeugungseinrichtung zum Erzeugen eines Bildes, das an die Eigenschaften der Anzeigeeinrichtung (4, 45, 46, 21) angepasst ist, unter Verwendung des mittels der Expansionseinrichtung (42) expandierten Bildes umfasst, wobei
die Anzeige-Steuereinrichtung (41) die Anzeigeeinrichtung (4, 45, 46, 21) das mittels der vierten Erzeugungseinrichtung (41) erzeugte Bild anzeigen lässt.

14. Elektronische Kameravorrichtung (1) nach einem der Ansprüche 3 bis 13, die des Weiteren eine Informiereinrichtung (41, 4, 46, 21) zum Informieren eines Benutzers über eine Tatsache, dass ein einfaches Bild auf der Anzeigeeinrichtung angezeigt wird, wenn das einfache Bild auf der Anzeigeeinrichtung (4, 45, 46, 21) angezeigt wird, umfasst.

15. Elektronische Kameravorrichtung (1) nach einem der Ansprüche 3 bis 14, wobei die Anzeigeeinrichtung (4, 45, 46, 21) eine Flüssigkristallanzeige (4, 45, 46) ist, die in einem Kamera-Hauptkörper (1, 2) vorhanden ist.

16. Verfahren zum Steuern einer elektronischen Kameravorrichtung, die ein aufzuzeichnendes aufgenommenes Bild komprimiert, wobei es umfasst:
Aufnehmen eines Bildes eines Objektes;
Erzeugen eines einfachen Bildes durch Ausdünnen des aufgenommenen Bildes;
Komprimieren des erzeugten einfachen Bildes unter Verwendung eines festen Kompressionsparameters;
Komprimieren des aufgenommenen Bildes unter Verwendung eines bestimmten Kompressionsparameters auf Basis eines Kompressionsfaktors des einfachen Bildes, der als Ergebnis der Kompression des einfachen Bildes gewonnen wird;
Aufzeichnen des unter Verwendung des bestimmten Kompressionsparameters auf Basis des Kompressionsfaktors bei der Kompression des einfachen Bildes komprimieren Bildes; und
Aufzeichnen des erzeugten einfachen Bildes bei gleichzeitiger Verknüpfung des einfachen Bildes mit dem komprimierten aufgezeichneten aufgenommenen Bild.

## Revendications

1. Dispositif d'appareil de prise de vues électronique (1) comprenant :
un moyen d'acquisition d'image (31) destiné à acquérir une image d'un objet,
un premier moyen de génération (41) destiné à générer une simple image en amincissant l'image acquise par le moyen d'acquisition d'image (31),
un premier moyen de compression (41, 42) destiné à compresser la simple image générée par le moyen de génération (41),
un second moyen de compression (41, 42) destiné à compresser l'image acquise par le moyen d'acquisition d'image (31),
un premier moyen d'enregistrement (40, 40a) destiné à enregistrer la simple image générée par le premier moyen de génération (41) tout en associant la simple image à l'image compressée enregistrée dans un second moyen d'enregistrement, et
un second moyen d'enregistrement (40, 40b) destiné à enregistrer l'image compressée par le second moyen de compression (41, 42),
**caractérisé en ce que**
le premier moyen de compression (41, 42) compresse la simple image générée par le premier moyen de génération (41) en utilisant un paramètre de compression fixe, et
le second moyen de compression (41, 42) compresse l'image acquise par le moyen d'acquisition (31) en utilisant un paramètre de compression déterminé d'après un facteur de compression de la simple image obtenue par suite de la compression par le premier moyen de compression (41, 42).

2. Dispositif d'appareil de prise de vues électronique selon la revendication 1, dans lequel le premier moyen d'enregistrement (40, 40a) enregistre la simple image compressée par le premier moyen de compression (41, 42) tout en associant la simple image à l'image compressée enregistrée dans le second moyen d'enregistrement.

3. Dispositif d'appareil de prise de vues électronique (1) selon la revendication 1 ou 2, **caractérisé par le fait qu'**il comprend en outre :
un moyen de commande d'affichage (41) destiné à amener un moyen d'affichage (4, 45, 46, 21) à afficher une image, et
un moyen d'indication d'affichage (48, 6, 7) destiné à indiquer un affichage d'image par le moyen d'affichage (4, 45, 46, 21), dans lequel
lorsqu'une image affichée par le moyen d'affichage (4, 45, 46, 21) a été indiquée par le moyen d'indication d'affichage (48, 6, 7), le moyen de commande d'affichage (41) amène le moyen d'affichage (4, 45, 46, 21) à afficher la simple image enregistrée dans le second moyen d'enregistrement (40, 40a).

4. Dispositif d'appareil de prise de vues électronique (1) selon la revendication 3, comprenant en outre un moyen d'expansion (42) destiné à expanser l'image enregistrée dans le second moyen d'enregistrement (40, 40b), dans lequel
le moyen de commande d'affichage (41) comprend en outre un moyen destiné à amener le moyen d'affichage (4, 45, 46, 21) à afficher l'image expansée par le moyen d'expansion (42) après avoir amené le moyen d'affichage (4, 45, 46, 21) à afficher la simple image.

5. Dispositif d'appareil de prise de vues électronique (1) selon la revendication 1 ou 2, comprenant en outre :
un moyen de commande d'affichage (41) destiné à amener un moyen d'affichage (4, 45, 46, 21) à afficher une image, et
un second moyen de génération (41) destiné à générer une simple image mise en correspondance avec des propriétés du moyen d'affichage (4, 45, 46, 21) en utilisant la simple image générée par le premier moyen de génération (41), dans lequel
le premier moyen d'enregistrement (40, 40a) enregistre la simple image générée par le second moyen de génération (41) tout en associant la simple image à l'image compressée enregistrée par le second moyen d'enregistrement.

6. Dispositif d'appareil de prise de vues électronique (1) selon la revendication 5, dans lequel le premier moyen de compression (41, 42) compresse la simple image générée par le second moyen de génération (41) en utilisant un paramètre de compression fixe.

7. Dispositif d'appareil de prise de vues électronique (1) selon la revendication 5 ou 6, dans lequel le second moyen de génération (41) génère une image mise en correspondance avec les propriétés du moyen d'affichage (4, 45, 46, 21) en exécutant un traitement de conversion de rapport de composantes et/ou un traitement de correction de gamma.

8. Dispositif d'appareil de prise de vues électronique (1) selon l'une quelconque des revendications 6 à 8, comprenant en outre un troisième moyen de génération destiné à générer une image mise en correspondance avec des propriétés du moyen d'affichage dont les propriétés sont différentes de celles du moyen d'affichage (4, 45, 46, 21) en utilisant l'image acquise par le moyen d'acquisition d'image (31), dans lequel
le second moyen de compression (41, 42) compresse l'image générée par le troisième moyen de génération (41) en utilisant un paramètre de compression déterminé sur la base d'un facteur de compression dans le premier moyen de compression (41, 42).

9. Dispositif d'appareil de prise de vues électronique (1) selon la revendication 8, dans lequel le moyen d'affichage dont les propriétés sont différentes de celles du moyen d'affichage (4, 45, 46, 21) est un moniteur destiné à un ordinateur personnel en tant qu'unité externe.

10. Dispositif d'appareil de prise de vues électronique (1) selon la revendication 8 ou 9, dans lequel le troisième moyen de génération (41) génère une image mise en correspondance avec des propriétés d'un moyen d'affichage qui sont différentes des propriétés du moyen d'affichage (4, 45, 46, 21) en exécutant un traitement de conversion de rapport de composantes et/ou un traitement de correction de gamma.

11. Dispositif d'appareil de prise de vues électronique (1) selon l'une quelconque des revendications 5 à 10, comprenant :
un moyen d'indication d'affichage (48, 6, 7) destiné à indiquer un affichage d'image par le biais du moyen d'affichage (4, 45, 46, 21), dans lequel
lorsqu'un affichage d'image par le moyen d'affichage (4, 45, 46, 21) a été indiqué par le moyen d'indication d'affichage (48, 6, 7), le moyen de commande d'affichage (41) amène le moyen d'affichage (4, 45, 46, 21) à afficher la simple image enregistrée dans le second moyen d'enregistrement (40, 40a).

12. Dispositif d'appareil de prise de vues électronique (1) selon la revendication 11, comprenant en outre un moyen d'expansion (42) destiné à expanser l'image enregistrée dans le premier moyen d'enregistrement (40, 40b), dans lequel
le moyen de commande d'affichage (41) comprend en outre un moyen destiné à amener le moyen d'affichage (4, 45, 46, 21) à afficher l'image expansée par le moyen d'expansion (42) après avoir amené le moyen d'affichage (4, 45, 46, 21) à afficher la simple image.

13. Dispositif d'appareil de prise de vues électronique (1) selon la revendication 12, comprenant en outre un quatrième moyen de génération destiné à générer une image mise en correspondance avec les propriétés du moyen d'affichage (4, 45, 46, 21) en utilisant l'image expansée par le moyen d'expansion (42), dans lequel
le moyen de commande d'affichage (41) amène le moyen d'affichage (4, 45, 46, 21) à afficher l'image générée par le quatrième moyen de génération (41).

14. Dispositif d'appareil de prise de vues électronique (1) selon l'une quelconque des revendications 3 à 13, comprenant en outre un moyen d'informations (41, 4, 46, 21) destiné à informer un utilisateur du fait que la simple image est affichée dans le moyen d'affichage lorsque la simple image est affichée sur le moyen d'affichage (4, 45, 46, 21).

15. Dispositif d'appareil de prise de vues électronique (1) selon l'une quelconque des revendications 3 à 14, dans lequel le moyen d'affichage (4, 45, 46, 21) est un dispositif d'affichage à cristaux liquides (4, 45, 46) dont est équipé un boîtier principal d'appareil de prise de vues (1, 2).

16. Procédé de commande d'un dispositif d'appareil de prise de vues électronique qui compresse une image acquise devant être enregistrée, comprenant :
l'acquisition d'une image d'un objet,
la génération d'une simple image en amincissant l'image acquise,
la compression de la simple image générée en utilisant un paramètre de compression fixe,
la compression de l'image acquise en utilisant un paramètre de compression déterminé sur la base d'un facteur de compression de la simple image obtenue par suite de la compression de la simple image,
l'enregistrement de l'image compressée en utilisant le paramètre de compression déterminé, sur la base du facteur de compression dans la compression de la simple image, et
l'enregistrement de la simple image générée tout en associant la simple image à l'image acquise compressée enregistrée.
